# EUROPÄISCHE PATENTSCHRIFT

(11) **EP 3 444 179 B1**
(45) Veröffentlichungstag und Bekanntmachung des Hinweises auf die Patenterteilung: **13.10.2021**
(21) Anmeldenummer: 18000660.3
(22) Anmeldetag: 08.08.2018
(51) Int. Cl.: B23B 51/04, B23G 5/06, F16K 5/06, F16L 41/04, B63C 7/00, B63B 25/08, B09B 3/00, B25B 27/00, E21B 43/01

(54) **ZUGANGSVORRICHTUNG FÜR EINEN FLUIDTANK**
ACCESS DEVICE FOR A FLUID TANK
DISPOSITIF D'ACCÈS POUR UN RÉSERVOIR DE LIQUIDE

(30) Priorität: 16.08.2017 DE 102017007700
(43) Veröffentlichungstag der Anmeldung: 20.02.2019
(73) Patentinhaber: B+Btec International Bv, 4762 AH Zevenbergen (NL)
(72) Erfinder: Jansen, Francis, 4762 AH Zevenbergen (NL)
(74) Vertreter: Lichti - Patentanwälte Partnerschaft mbB

(56) Entgegenhaltungen:
- US-A- 3 831 387
- US-A- 5 546 979
- US-A- 5 704 383
- US-A- 5 775 390

## Beschreibung

Die Erfindung betrifft eine Zugangsvorrichtung für einen Fluidtank, insbesondere eines Schiffes.

Bei teilweise oder vollständig gesunkenen Schiffen, bei-spielsweise aufgrund einer Havarie, besteht die Gefahr, dass flüssiger Kraftstoff zum Antrieb des Schiffes oder aber flüssige Ladung, insbesondere Rohöl austritt und das Gewässer und damit die Umwelt verschmutzt.

Es ist daher wichtig, bei solchen gesunkenen Schiffen sowohl den Kraftstoff als auch die geladene gewässergefährdende Flüssigkeit, wie eben Rohöl, abzupumpen. Oft besteht keine Möglichkeit dies über die normalen Anschlüsse eines solchen Schiffes zu tun. Man muss sich daher dann vielmehr Zugang zum entsprechenden Tank - für den Kraftstoff oder die geladene Flüssigkeit - in anderweitiger Weise verschaffen. Dokument US5546979 A offenbart den Oberbegriff des Anspruchs 1.

Der Erfindung liegt daher die Aufgabe zugrunde, eine Zu-gangsvorrichtung für einen Fluidtank, also insbesondere Flüssigkeitstank, der gattungsgemäßen Art zu schaffen, die einen Zugang zu einem solchen Tank unabhängig von dessen üblichen Anschlüssen (Ein- und Auslässen) ermöglicht. Erfindungsgemäß wird die genannte Aufgabe bei einer Zugangsvorrichtung der eingangs genannten Art gelöst durch einen Bohrer, durch eine Gewindeformeinheit, die an ihrem Umfang Gewindeformräder aufweist, durch einen mit einem Ventil versehenen Hohlkörper mit einem Außengewinde und eine Verbindungsplatte.

Die Erfindung kann auch bei anderen Fluidbehältern, insbesondere Flüssigkeitsbehälter als Tank von Schiffen eingesetzt werden, wenn letztere auch das bevorzugte Einsatzgebiet ist. Die genannten Komponenten sind zusammen in der erfindungsgemäßen Vorrichtung verwirklicht und bilden diese als eine Einheit. Durch diese Zugangsvorrichtung kann an einer anderen Stelle als den üblichen Verbindungselementen (Zu-/Auslässen) ein Zugang zu einem Tank, insbesondere eines gesunkenen Schiffes, geschaffen werden, indem die gesamte Vorrichtung mit ihrer Verbindungsplatte, die mit geeigneten Verbindungselementen versehen ist, an einem Bohrgestänge, wie an einem Bohrantrieb, insbesondere einer hydraulischen Bohrmaschine oder hydraulischem Bohrgestänge verbunden werden und dann mittels des Bohrers ein Loch in die Tankwand eingebohrt wird. Durch die Gewindeformeinheit wird in die das gebohrte Loch umgebene Kante der Wandung des Tanks ein Gewinde eingeschnitten, in welches dann der Hohlkörper mit seinem Außengewinde eingeschraubt wird. Über einen dann innerhalb des Tanks liegenden Einlass des von einem außerhalb des Tanks liegenden Auslass kann dann anstelle der entfernten Bohreinrichtung mit der Verbindungsplatte verbundenen Schlauch- oder Rohrsystem über eine Pumpe der Inhalt des Tanks abgepumpt werden.

Dementsprechend sind die oben genannten Teile hintereinander in der genannten Reihenfolge angeordnet, wobei der Bohrer am distalen Ende der Vorrichtung angeordnet ist, die Verbindungsplatte am proximalen.

Mit distal werden dem Benutzer, Bediener oder Werker abgewandte Bereiche, dem Arbeitsort zugewandte Bereiche, mit proximal dem Bediener oder Werker zugewandte und dem Arbeitsbereich abgewandte Bereiche der Vorrichtung bezeichnet.

In bevorzugter Ausgestaltung ist der Bohrer ein Diamantbohrer, der insbesondere ein mit Diamantsegmenten versehenes Rohr aufweist. Das zylindermantelförmige Rohr umgibt einen Hohlraum und weist an der Stirnseite seiner es bildenden Mantelwand die Diamantsegmente auf. Das Rohr schafft damit eine Austrittsöffnung für das Öl in der Wandung des Tanks (nach Festlegung der Vorrichtung am Tank). Die Diamantsegmente sind am distalen Ende des Rohrs angeordnet. Sie bestehen aus Stahlelementen, die zumindest stirnseitig mit Diamantsplittern versehen sind. Auch das Rohr besteht aus Stahl.

Die Gewindeformeinheit ist erfindungsgemäß dadurch gebildet, dass sie am Umfang Gewindeformräder aufweist, die vorzugsweise gleichmäßig über dem Umfang der Gewindeformeinheit angeordnet sind. Die Zahl der Gewindeformräder liegt vorzugsweise zwischen zwei und vier, insbesondere sind drei Gewindeformräder vorgesehen.

Gemäß bevorzugter Ausgestaltung ist vorgesehen, dass die Gewindeformeinheit einer Gewindewalz- oder eine Gewindeschneideinheit und die Gewindeformräder Gewindewalzen oder Gewindeschneidräder sind. Während Gewindeschneiden ein spanabhebendes Verfahren zur Herstellung des Gewindes ist, ist Gewindewalzen ein Umformverfahren. Bei letzterem kann mit geringeren Kräften als bei ersterem gearbeitet werden.

In einer anderen äußerst bevorzugten Ausgestaltung der Erfindung ist vorgesehen, dass der radiale Abstand der Außenkontur eines wirksamen Bereichs der Gewindeformeinrichtung von einer Mittelachse der Vorrichtung dem Radius des Außengewindes des Hohlkörpers entspricht. Hierdurch wird erreicht, dass der proximal unmittelbar der Gewindeformeinrichtung bzw. den Gewindeformrädern folgende mit einem Au-βengewinde versehene Bereich des Hohlkörpers bei weiterem Eindrehen bzw. Einschrauben der Vorrichtung mittels der an der Verbindungsplatte angreifenden Bohrmaschine unmittelbar in das durch die Gewindeformeinheit geformte Gewinde eingreift und die Vorrichtung in diesem derart weiter eingeschraubt werden kann.

In einer weiteren bevorzugten Ausgestaltung ist vorgesehen, dass der Hohlkörper eine Schulter mit einer Dichtung auf-weist. Durch die Schulter wird der Durchmesser des Hohlkörpers zu einem proximalen Bereich gegenüber seinem das Au-βengewinde aufweisenden distalen Bereich radial vergrößert, so dass die Dichtung distal an der Schulter anliegt und durch das Einschrauben des Hohlkörpers in die Gehäusewand des Tanks bis zur Dichtung und schließlich unter Zusammenpressen derselben eine zuverlässige Abdichtung der in den Tank eingebrachten Bohrung und damit des Inneren des Tanks vom Äußeren geschaffen wird.

Um nach dem Einbringen und Festlegen der erfindungsgemäßen Zugangsvorrichtung in dem und am Tank das Abpumpen zu ermöglichen, ist weiterhin gemäß einer bevorzugten Ausgestal-tung vorgesehen, dass der Hohlkörper ein Kugelventil aufweist. Dieses kann aus dem ursprünglich beim Einbringen des Lochs in die Gehäusewand und Einschrauben der Zugangsvorrichtung gegebenen geschlossenen Ventilzustand durch Verschwenken eines Ventilkörpers des Ventils in eine Offenstellung um eine senkrecht zur Hauptlängsachse der Zugangsvorrichtung stehende Ventilachse gebracht werden und so eine Verbindung zwischen dem Inneren des Tanks und dem Äußeren und insbesondere einer an der Verbindungsplatte angeschlossenen Schlauch- oder Rohrleitung zum Abpumpen der Flüssigkeit im Tank hergestellt werden.

In weiterer bevorzugter Ausgestaltung ist vorgesehen, dass der Hohlkörper eine seitliche Öffnung als Fluideinlass aufweist, wobei die seitliche Öffnung distal einer Schulter des Hohlkörpers angeordnet ist.

Zur Bedienung des Ventils in der beschriebenen Weise weist dieses vorzugsweise ein Bedienelement an der Außenseite der Mantelwand des Hohlkörpers auf, wobei das Bedienelement vorzugsweise als Dreieckschlüsselaufnahme ausgebildet ist, aber auch anderweitig mehrkantig ausgebildet sein kann, beispielsweise als Vier- oder Sechskantaufnahme.

Der Einsatz der erfindungsgemäßen Zugangsvorrichtung für einen Fluid- insbesondere Flüssigkeitstank geschieht vorzugsweise folgendermaßen:
Die Vorrichtung wird an ihrer proximalen Anschlussplatte über geeignete Verbindungselemente, wie Schrauben mit einem Bohrantrieb, insbesondere einer hydraulischen Bohrmaschine verbunden, dann gegen die Wandung des Tanks, beispielsweise eines Schiffes, mit dem distalen Ende des Bohrers und dessen wirksamen Bohrsegmenten verfahren und dann unter axialer Druckausübung in Bohrdrehung versetzt, wodurch ein Loch in die Wand des Tanks geschnitten wird, unter weiterem Drehen und axialem Verfahren greift die unmittelbar proximal dem Bohrer folgende Gewindeformeinheit in die das Bohrloch umgebende Kante der Wandung des Tanks ein und formt in diese ein Gewinde, vorzugsweise bei einer Gewindewalzeeinheit durch Umformen der der das Bohrloch umgebenden Wandung des Tanks in das sodann ebenfalls unter weiterem Verdrehen der erfindungsgemäßen Vorrichtung mittels der hydraulischen Bohrmaschine das Außengewinde des Hohlkörpers eingreift und dieser daher in das Bohrloch eingeschraubt wird, bis die vorzugsweise vorgesehene Dichtung an dem das Bohrloch umgebenden Außenwandungsbereich des Tanks zum Anliegen kommt und dort dichtend zusammengedrückt wird.

Daraufhin wird über das Bedienungselement des Ventils, wie die erwähnte Schlüsselaufnahme das Ventil aus seiner Schließstellung in eine Öffnungsstellung verschwenkt, bespielsweise durch einen Taucher, der mittels eines geeigneten Werkzeugs am Bedienelement der Zugangsvorrichtung angreift. Anschließend kann dann die Flüssigkeit aus dem Tank über die Zugangsvorrichtung und einen gegebenenfalls in den Bohrantrieb integrierten bzw. kombinierten proximal angeschlossenen Schlauch oder ein Rohr mittels einer Pumpe abgesaugt werden. Bei getrenntem Bohrantrieb und Absaugschlauch bzw. -rohr, wird zum Öffnen des Ventils der Bohr-antrieb entfernt und mit der Verbindungsplatte eine Schlauch- oder Rohrleitung dicht verbunden.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im Einzelnen erläutert ist. Dabei zeigt:
- Fig. 1: Eine perspektivische Darstellung einer bevorzugten Ausführungsform der erfindungsgemäßen Vorrichtung; und
- Fig. 2: einen Längsschnitt durch die bevorzugte Ausgestaltung der erfindungsgemäßen Vorrichtung gemäß Fig. 1.

Die erfindungsgemäße Vorrichtung zur Schaffung eines Zugangs zu einem Fluidtank, insbesondere eines teilweise oder vollständig gesunkenen Schiffes weist an ihrem distalen Ende einen Bohrer 1 in Form eines Diamantbohrers mit am Umfang eines Rohres 1.1 angeordneten, sich axial erstreckenden Diamantsegmenten 1.2 auf. Die Diamantsegmente 1.2 können, ebenso wie das Rohr 1.1, aus Edelstahl bestehen und sind an ihrer dem Rohr 1.1 abgewandten freien Stirnseite mit Diamantelementen versehen. Proximal zum Bohrer 1 schließt sich, im dargestellten Ausführungsbeispiel eine Gewindewalzeinheit 2, an.

Die Gewindewalzeinheit 2 weist über ihren Umfang gleichmäßig verteilt Gewindewalzräder 3 auf, deren Außenkontur geringfügig über der deren radiale Außenkontur geringfügig über der des Bohrers 1 liegt. Die Gewindewalzeinheit 2 ist mit dem Bohrer 1 verschweißt, also durch Schweißung verbunden. Wiederum proximal zur Gewindewalzeinheit 2 schließt sich ein Hohlkörper 4 an, der in einem Bereich distal einer Schulter 4.2 ein Außengewinde 4.1 aufweist. Die Gewindewalzeinheit 2 und Hohlkörper 4 sind mittels mehrerer über den Umfang gleich verteilter axial gerichteter Schrauben 2.1 miteinander verbunden.

Die radiale Außenkontur der Walzeinheit 2 in ihrem wirksamen Bereich, also dem Bereich der Gewindewalzräder 3, und damit die radiale Außenkontur der Gewindewalzräder 3 stimmt mit der radialen Außenkontur bzw. dem radialen Abstand des Gewindes 4.1 des Hohlkörpers 4 von der zentralen Längsachse A überein.

Im Bereich des Gewindes 4.1 ist der Hohlkörper 4 mit einem Fluideinlass 8 versehen. Über die proximal zum Gewinde 4.1 angeordnete Schulter 4.2 erweitert sich der Hohlkörper 4 zu einem Radius bzw. Durchmesser, der größer ist als der Radius oder Durchmesser seines Abschnitts im Bereich des Gewindes 4.1. Distal der Schulter 4.2 ist am proximalen Ende des Gewindes 4.1 eine elastische Dichtung 5 angeordnet. Innerhalb des erweiterten Bereichs 4.3 des Hohlkörpers ist ein Ventil 6A in Form eines Kugelventils angeordnet, das um eine Achse senkrecht zur Längsachse A der Vorrichtung verschwenkbar ist, so dass das Kugelventil einen Fluidweg zwischen dem Fluideinlass 8 und einem proximal des Kugelventils 6A als Fluidauslass vorgesehenen Durchbruch 7.1 sperren oder freigeben kann. Zur Bedienung des Kugelventils 6A ist dieses zur Außenseite der Vorrichtung hin mit einer Schlüsselaufnahme 6, hier in Form einer Dreikantschlüsselaufnahme, versehen. Stattdessen kann die Schlüsselaufnahme auch ein in Form eines Vier- oder Sechskants oder in anderer Weise ausgebildet sein.

Proximal des Hohlkörpers 4 ist eine Verbindungsplatte 7 vorgesehen, die mittels gleichmäßig über den Umfang verteilter Schrauben 7.2 mit dem Hohlkörper 4 verbunden ist, indem sie die Wandung des Hohlkörpers 4 eingreifen. Die Verbindungsplatte 7 dient zum einen zur Verbindung der Vorrichtung mit einem Bohrantrieb, vorzugsweise einem hydraulischen Bohrantrieb (nicht dargestellt), zum anderen zur Verbindung mit einem Saugschlauch (ebenfalls nicht dargestellt) zum Absaugen des Fluids, insbesondere einer Flüssigkeit, wie Öl, aus dem Tank eines Schiffes durch die erfindungsgemäße Vorrichtung bei geöffnetem Ventil 6A hindurch. Hierzu ragen proximal aus der Verbindungsplatte 7 ebenfalls gleichmäßig über den Umfang verteilt Verbindungsschrauben 7.3.

Der Einsatz und die Funktion der erfindungsgemäßen Zugangsvorrichtung für einen Fluidtank, insbesondere ein Flüssigkeitstank, wie ein Öltank eines Schiffes, ist die folgende:
Die erfindungsgemäße Vorrichtung wird zunächst über die Schrauben 7.3 ihrer Verbindungsplatte 7 mit einem Bohrantrieb, vorzugsweise einer hydraulischen Bohrmaschine, verbunden und mittels diesem mit dem Bohrer 1 und insbesondere dessen Diamantsegmenten 1.2 an der Außenseite des Tanks bzw. eines Schiffrumpfs im Bereich eines Tanks des Schiffes angesetzt und durch den Bohrantrieb in Drehbewegung versetzt. Der Bohrer 1 bzw. dessen Diamantsegmente 1.2 schneiden ein Loch in die Wand des Tanks bzw. des Schiffrumpfs.

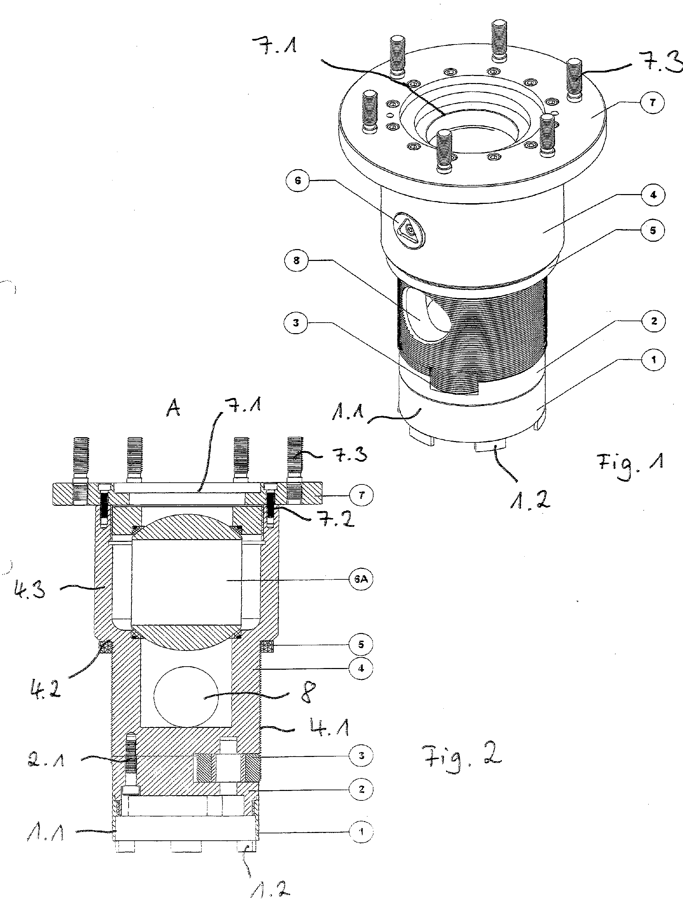

Bei weiterem Vorschub der Vorrichtung durch das Bohrgestänge greift die Schneideinrichtung 2 mit ihren Gewindeschneidrädern 3 in das geschaffene Loch ein und insbesondere am Umfangsrand des Lochs in der Tank- bzw. Schiffswandung an und schneiden beim weiteren Verdrehen der Vorrichtung mittels des Bohrantriebs ein Gewinde in Umfangsrand der Tankwandung. Nach Schneiden, Formen mit Walzen des Gewindes und weiterem Vorschub der Vorrichtung greift das Gewinde 4.1 des Hohlkörpers 2 in das in der Tankwand eingeformte Gewinde ein und wird in diesem eingeschraubt, bis die Außenseite der Tankwandung distal der Dichtung 5 anliegt und diese fluiddicht zusammenpresst. Während des gesamten vorstehend beschriebenen Ablaufs ist das Ventil 6A geschlossen und damit in der in Fig. 2 gezeigten Position. Nach Einbringung der Vorrichtung bis zur Dichtung 5 in das Innere des Tanks in der vorbeschriebenen Weise liegt die Einlassöffnung 8 innerhalb des Tanks. Nun wird der Bohrantrieb entfernt und mit der Verbindungsplatte 7, ebenfalls über die Schrauben 7.3, ein Absaugschlauch, mit der Vorrichtung verbunden. Anschließend kann von außen über die Schlüsselaufnahme 6 des Ventils 6A, beispielsweise durch einen Taucher oder ein roboterartiges Gerät, das Ventil 6A geöffnet werden, indem es um seine senkrecht zur Längsachse A gerichtete Drehachse um 90° verschwenkt wird und damit den Durchlass zwischen dem Fluideinlass 8 und dem Auslass oder Durchbruch 7.1 in der Verbindungsplatte 7 freigibt. Anschließend kann die Flüssigkeit im Tank durch die erfindungsgemäße Vorrichtung mittels des Saugschlauches abgesaugt werden.

## Patentansprüche

1. Zugangsvorrichtung für einen Fluidbehälter, insbesondere eines Schiffes, mit einem Bohrer, einer Gewindeformeinheit (2) und einen mit einem Ventil (6A) versehenen Hohlkörper (4), **dadurch gekennzeichnet, dass** eine Verbindungsplatte (7) vorgesehen ist, dass der Hohlkörper (4) mit einem Außengewinde (4.1) versehen ist und dass die Gewindeformeinheit (2) an ihrem Umfang Gewindeformräder (3) aufweist.

2. Vorrichtung nach Anspruch 1, **dadurch gekennzeichnet, dass** der Bohrer (1) ein Diamantbohrer ist.

3. Vorrichtung nach Anspruch 1 oder 2, **dadurch gekennzeichnet, dass** der Bohrer (1) ein Rohr (1.1) mit Diamantsegmenten (1.2) aufweist.

4. Vorrichtung nach Anspruch 3, **dadurch gekennzeichnet, dass** das Rohr (1.1) des Bohrers (1) aus Edelstahl besteht.

5. Vorrichtung nach einem der vorangehenden Ansprüche, **dadurch gekennzeichnet, dass** die Gewindeformräder (3) gleichmäßig über den Umfang der Gewindeformeinheit (2) verteilt sind.

6. Vorrichtung nach einem der vorangehenden Ansprüche, **dadurch gekennzeichnet, dass** die Gewindeformeinheit eine Gewindewalze- oder eine Gewindeschneideinheit und die Gewindeformräder Gewindewalzen oder Gewindeschneid-räder sind.

7. Vorrichtung nach einem der vorangehenden Ansprüche, **dadurch gekennzeichnet, dass** der radiale Abstand der Außenkontur eines wirksamen Bereichs der Gewindeformeinheit (2), von einer Mittelachse (A) der Vorrichtung dem Radius des Außengewindes (4.1) des Hohlkörpers (4) entspricht.

8. Vorrichtung nach einem der vorangehenden Ansprüche, **dadurch gekennzeichnet, dass** der Hohlkörper (4) eine Schulter (4.2) mit einer Dichtung (5) aufweist.

9. Vorrichtung nach einem der vorangehenden Ansprüche, **dadurch gekennzeichnet, dass** der Hohlkörper (4) ein Kugelventil (6A) aufweist.

10. Vorrichtung nach Anspruch 9 **dadurch gekennzeichnet, dass** das Ventil (6A) ein Bedienungselement (6) an der Außenseite des Hohlkörpers (4) aufweist.

11. Vorrichtung nach Anspruch 10, **dadurch gekennzeichnet, dass** das Bedienungselement (6) als Dreieckschlüsselaufnahme ausgebildet ist.

12. Vorrichtung nach einem der vorangehenden Ansprüche, **dadurch gekennzeichnet, dass** der Hohlkörper (4) eine seitliche Öffnung (8) als Fluideinlass aufweist.

13. Vorrichtung nach Anspruch 12, **dadurch gekennzeichnet, dass** die seitliche Öffnung (8) distal einer Schulter (6.2) des Hohlkörpers (4) angeordnet ist.

## Claims

1. An access device for a fluid container, in particular of a ship, with a drill, a thread forming unit (2) and a hollow body (4) provided with a valve (6A), **characterized in that** a connection plate (7) is provided, that the hollow body (4) is provided with an external thread (4.1) and that the thread forming unit (2) has thread cutting wheels (3) on its circumference.

2. Device according to claim 1, **characterized in that** the drill (1) is a diamond drill.

3. Device according to claim 1 or 2, **characterized in that** the drill (1) has a tube (1.1) with diamond segments (1.2) .

4. Device according to claim 3, **characterized in that** the tube (1.1) of the drill (1) consists of stainless steel.

5. Device according to one of the preceding claims, **characterized in that** the thread cutting wheels (3) are evenly distributed over the circumference of the thread forming unit (2).

6. Device according to one of the preceding claims, **characterized in that** the thread forming unit is a thread rolling unit or a thread cutting unit and that the thread forming wheels are thread rolling wheels or thread cutting wheels.

7. Device according to one of the preceding claims, **characterized in that** the radial distance of the outer contour of an effective region of the thread forming device (2) from a central axis (A) of the device corresponds to the radius of the outer thread (4.1) of the hollow body (4).

8. Device according to one of the preceding claims, **characterized in that** the hollow body (4) has a shoulder (4.2) with a seal (5).

9. Device according to one of the preceding claims, **characterized in that** the hollow body (4) has a ball valve (6a).

10. Device according to claim 9, **characterized in that** the valve (6A) has a control element (6) on the outer side of the hollow body (4).

11. Device according to claim 10, **characterized in that** the control element (6) is designed as a triangular wrench key receiver.

12. Device according to one of the preceding claims, **characterized in that** the hollow body (4) has a lateral opening (8) as a fluid inlet.

13. Device according to claim 12, **characterized in that** the lateral opening (8) is arranged distally to a shoulder (6.2) of the hollow body (4).

## Revendications

1. Dispositif d'accès pour un réservoir de liquide, notamment d'un navire, avec un foret, une unité de moulage de filet (2) et un corps creux (4) pourvu d'une soupape (6A), **caractérisé en ce qu'**une plaque de liaison (7) est prévue, que le corps creux (4) est pourvu d'un filet extérieur (4.1) et que l'unité de moulage de filet (2) comporte des roues de moulage de filet (3) au niveau de sa périphérie.

2. Dispositif selon la revendication 1, **caractérisé en ce que** le foret (1) est un foret à diamants.

3. Dispositif selon la revendication 1 ou 2, **caractérisé en ce que** le foret (1) comporte un tube (1.1) avec des segments de diamant (1.2).

4. Dispositif selon la revendication 3, **caractérisé en ce que** le tube (1.1) du foret (1) est en inox.

5. Dispositif selon l'une quelconque des revendications précédentes, **caractérisé en ce que** les roues de moulage de filet (3) sont réparties de façon uniforme sur l'ensemble de la périphérie de l'unité de moulage de filet (2).

6. Dispositif selon l'une quelconque des revendications précédentes, **caractérisé en ce que** l'unité de moulage de filet est une unité de découpe de rouleau de filet ou de filet et que les roues de moulage de filet sont des roues de découpe de rouleau de filet ou de filet.

7. Dispositif selon l'une quelconque des revendications précédentes, **caractérisé en ce que** la distance radiale du contour extérieur d'une région active de l'unité de moulage de filet (2) d'un axe central (A) du dispositif correspond au rayon du filet extérieur (4.1) du corps creux (4).

8. Dispositif selon l'une quelconque des revendications précédentes, **caractérisé en ce que** le corps creux (4) comporte un épaulement (4.2) avec un joint (5).

9. Dispositif selon l'une quelconque des revendications précédentes, **caractérisé en ce que** le corps creux (4) comporte une soupape sphérique (6A).

10. Dispositif selon la revendication 9, **caractérisé en ce que** la soupape (6A) comporte un élément de commande (6) placé au niveau du côté extérieur du corps creux (4).

11. Dispositif selon la revendication 10, **caractérisé en ce que** l'élément de commande (6) prend la forme d'un logement de clé triangulaire.

12. Dispositif selon l'une quelconque des revendications précédentes, **caractérisé en ce que** le corps creux (4) comporte une ouverture latérale (8) prenant la forme d'un orifice d'admission de liquide.

13. Dispositif selon la revendication 12, **caractérisé en ce que** l'ouverture latérale (8) est disposée distalement par rapport à un épaulement (6.2) du corps creux (4).
